# EUROPEAN PATENT APPLICATION

(11) **EP 2 690 337 A1**
(43) Date of publication of application: **29.01.2014**
(21) Application number: 12760667.1
(22) Date of filing: 14.03.2012
(51) Int. Cl.: F16L 21/08, F16L 37/12

(54) **PIPE JOINT**

(30) Priority: 22.03.2011 JP 2011062383; 19.10.2011 JP 2011229951
(71) Applicant: Inoue Sudare Co., Ltd., Kawachinagano-shi Osaka 586-0086 (JP); Higashio Mech Co., Ltd., Kawachinagano-shi Osaka 586-0012 (JP); Sekisui Chemical Co., Ltd., Osaka 530-8565 (JP)
(72) Inventor: INOUE, Hiroshi, Kawachinagano-shi Osaka 586-0086 (JP); HAGINO, Tomokazu, Ritto-shi Shiga 520-3027 (JP); TAKAHASHI, Kiyokazu, Kawachinagano-shi Osaka 586-0086 (JP); MASUI, Katsuyuki, Kawachinagano-shi Osaka 586-0012 (JP)
(74) Representative: HOFFMANN EITLE
(86) International application number: PCT/JP2012/056583
(87) International publication number: WO 2012/128152

(57) **Abstract**

To provide a pipe joint having sufficient pipe drawing force, a pipe-fastening ring unit U of double elastic construction, having a C-shaped fastening ring body 5 for clamping as an inner layer and a C-shaped elastic mounted body 10 to augment clamping force added as an outer layer of the elastic fastening ring body 5, is provided.

## Description

### FIELD OF THE INVENTION

This invention relates to a pipe joint.

### BACKGROUND ART

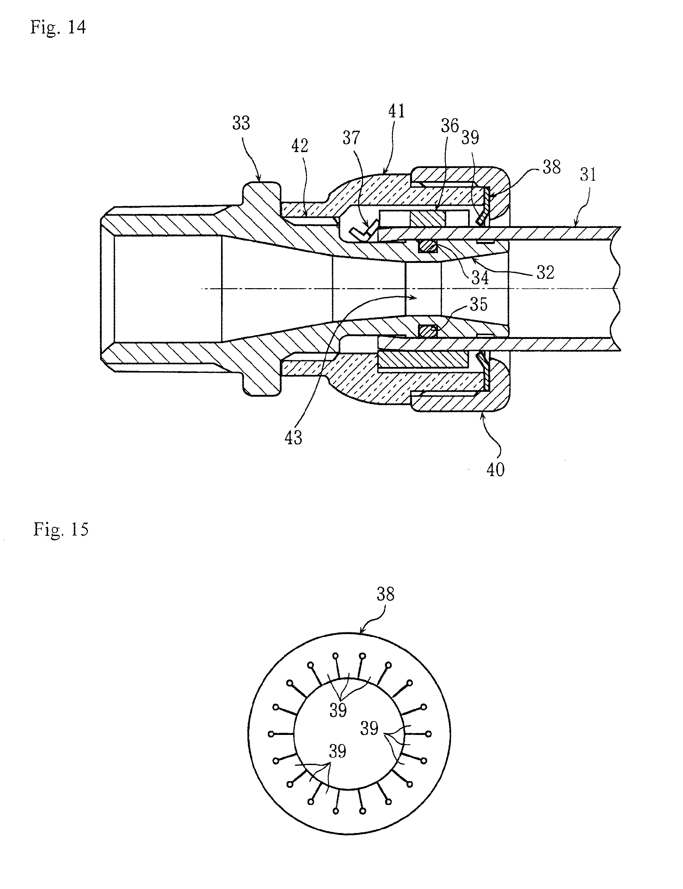

Conventionally, many pipe joints to strengthen drawing force to connected pipes have been proposed. For example, as shown in Figures 14 through 17, a pipe joint provided with a pipe joint main body 33 having an insertion cylinder portion 32 inserted to an end portion of a pipe 31 to be connected, a sealing material 35 attached to a concave peripheral groove 34 of the insertion cylinder portion 32, a fastening ring body 36 with a slit to fasten the end portion of the pipe 31 mounted to the insertion cylinder portion 32 with elastic fastening force F₃₆, a diameter expansion piece 37 releasably held by end portions of the slit as to expand the fastening ring body against the elastic force of the fastening ring body 36 and released by contact with a forth end portion of the inserted pipe 31, and a stopping ring 38 of which inner peripheral face hitches to peripheral face of the pipe 31 mounted to the insertion cylinder portion 32, wherein plural teeth portions 39 are cut in peripheral direction on the inner peripheral side of the stopping ring 38 with uniform intervals, is known (refer to patent document 1, for example).

### PRIOR ART DOCUMENT

### PATENT DOCUMENT

Patent document 1 : Japanese Patent NO. 3411546.

### OUTLINE OF THE INVENTION

### PROBLEMS TO BE SOLVED BY THE INVENTION

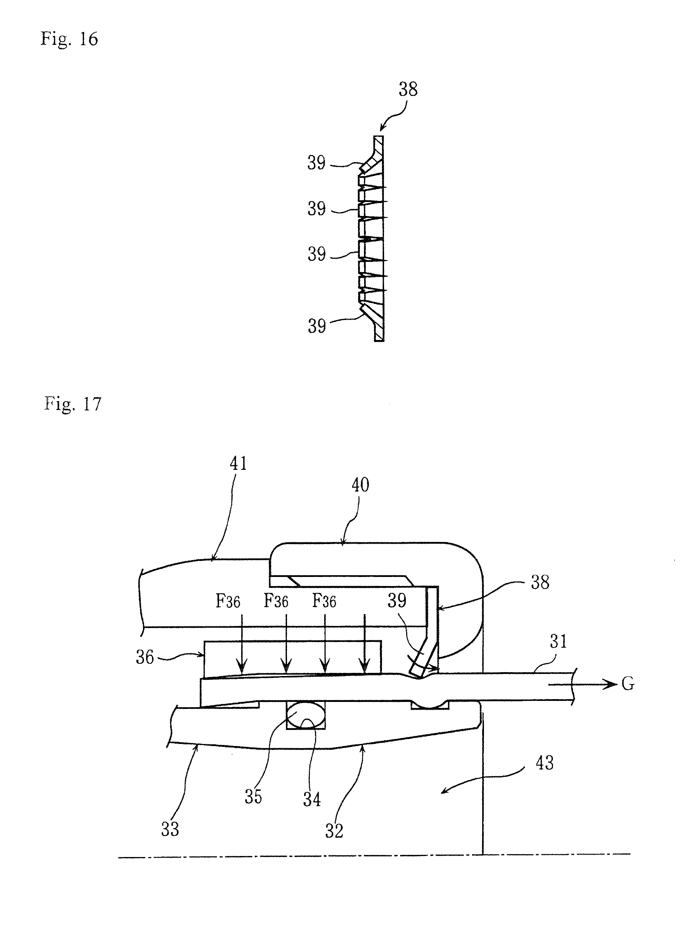

The conventional pipe joint, shown in Figures 14 through 17 described above, has following problems.
(i) Although the end portion of the pipe 31 is fastened by the fastening ring body 36 with the elastic fastening force F₃₆ (refer to Figure 17) to prevent the pipe 31 from being drawn off in an arrow G direction, the drawing stopping power is insufficient. (ii) The stopping ring 38 is necessary further because the drawing stopping power is insufficient with only the elastic fastening force F₃₆ of the fastening ring body 36. (iii) As shown in Figure 14, a cap nut 40, a transparent surrounding cylinder body 41, a screwed portion 42, etc. need sufficient thickness and mutual connection strength because reaction force of the pipe 31 received by the stopping ring 38 is transmitted to the joint main body 33 through the cap nut 40, the transparent surrounding cylinder body 41, and the screwed portion 42. (iv) The sealing material 35 and the sealing groove (concave peripheral groove) 34 are necessary, and leakage of fluid is unavoidable without the sealing material 35. (v) The thickness dimension of the insertion cylinder portion 32 is increased, a through hole (flowing hole) 43 is diminished in diameter, and fluid passing resistance is increased because the sealing material 35 and the sealing groove (concave peripheral groove) 34 are necessary. Therefore, solving the conventional problems (i) through (v), it is an object of the present invention to provide a pipe joint with which the pipe is certainly prevented from being drawn off, number of parts can be decreased with a simple construction, and production also becomes easy.

### MEANS FOR SOLVING THE PROBLEMS

The pipe joint relating to the present invention is a pipe joint provided with a joint main body having an insertion cylinder portion inserted to an end portion of a pipe to be connected, a C-shaped fastening ring body with a slit to fasten the end portion of the pipe mounted to the insertion cylinder portion with elastic fastening force, a diameter expansion piece releasably held by end portions of the slit as to expand the fastening ring body against the elastic force of the fastening ring body and released by detection of a forth end portion of the inserted pipe, in which a C-shaped elastic mounted body mounted to the fastening ring body to augment the elastic fastening force.

And, an inner peripheral face of the C-shaped elastic mounted body is always tightly fit to a peripheral face of the fastening ring body.

And, the inner peripheral face of the C-shaped elastic mounted body is mounted to the peripheral face of the fastening ring body as more than 90% of an arc length of the inner peripheral face is non-contact state, and a slit forming end portion of the C-shaped elastic mounted body is hitched to a hitching protruding piece protruding near both end portions forming the slit of the fastening ring body.

And, the end portion of the pipe is press-fit to the insertion cylinder portion with high contact pressure by augmented fastening force, fastening the end portion of the pipe with a double elastic construction in which the C-shaped elastic mounted body is mounted to the fastening ring body.

### EFFECTS OF THE INVENTION

According to the present invention, solving the above-described conventional problems (i) through (v), the pipe is certainly prevented from being drawn off, number of parts can be decreased with a simple construction, and production also becomes easy. And, the sealing material and the sealing groove can be omitted in many cases, the diameter of the through hole (flowing hole) on the insertion cylinder portion can be increased, and fluid passing resistance can be decreased.

### BRIEF DESCRIPTION OF THE DRAWINGS

[Figure 1] A cross-sectional view of a principal portion showing an embodiment of the present invention.
[Figure 2] A cross-sectional view of the principal portion of completed state of pipe connection.
[Figure 3] A front view of a principal portion shown with a partial cross section.
[Figure 4] A right side view of a principal portion of Figure 3.
[Figure 5] Schematic explanatory views of construction.
[Figure 6] A front view of a principal portion showing another embodiment of the present invention with partial cross section in unconnected state of the pipe.
[Figure 7] A side view of a principal portion of Figure 6.
[Figure 8] A schematic explanatory view of construction.
[Figure 9] A front view of principal parts to explain diminished diameter state in the completed state of pipe connection.
[Figure 10] Figures showing concrete examples of an elastic inner ring of which (A) is a top view and (B) is a front view.
[Figure 11] A perspective view of the unconnected state of the pipe of Figure 6.
[Figure 12] An enlarged explanatory view of a principal portion.
[Figure 13] An enlarged cross-sectional view of a principal portion showing a modification of the present invention.
[Figure 14] A cross-sectional view showing a conventional example.
[Figure 15] A front view of a stopping ring used in the conventional example.
[Figure 16] A cross-sectional side view of the stopping ring of the conventional example.
[Figure 17] An enlarged explanatory view of a principal portion of the conventional example.

### EMBODIMENTS OF THE INVENTION

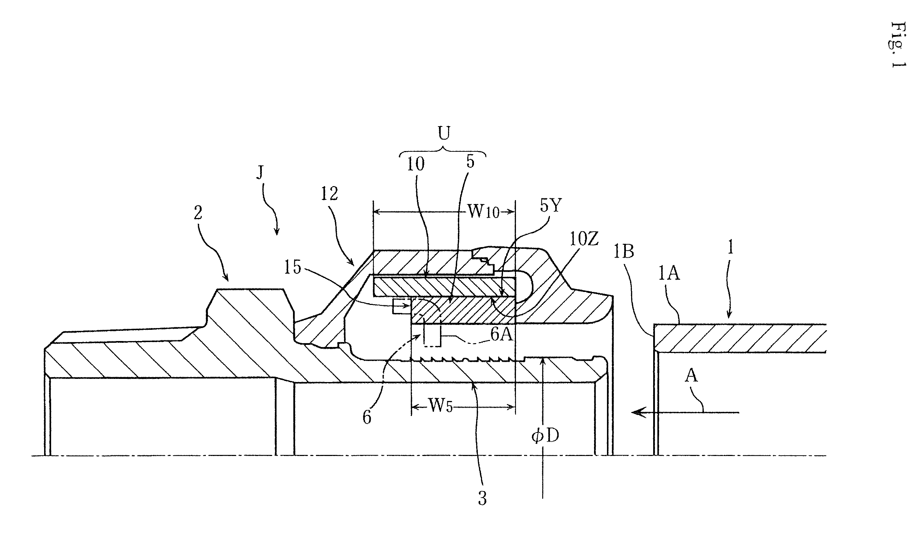

The present invention will now be described according to the embodiments shown in the drawings. Figure 1 through Figure 5 show an embodiment of the present invention.

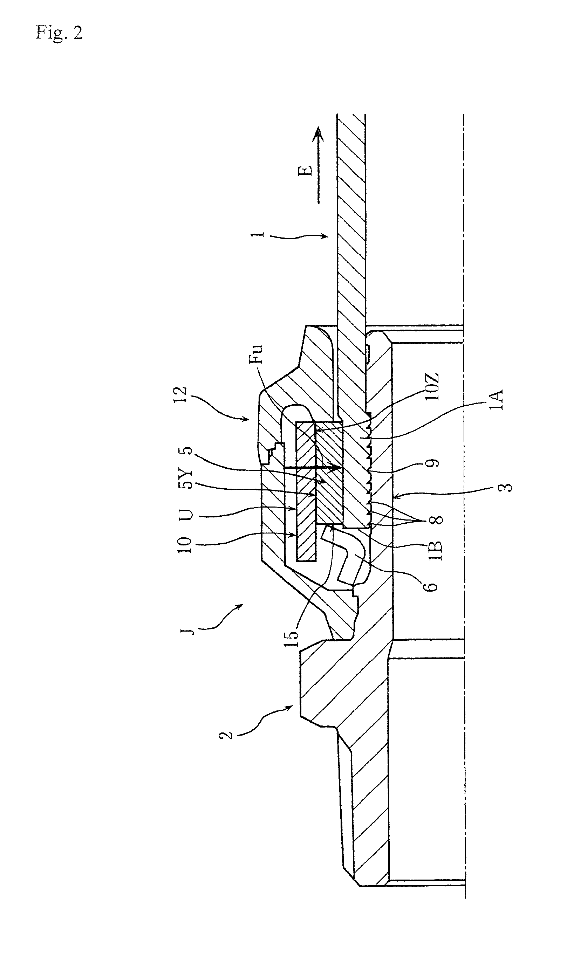

In Figure 1 and Figure 2, a mark 1 represents a pipe to be connected of which end portion 1A is inserted to a pipe joint J relating to the present invention. A mark 2 represents a joint main body unitedly having an insertion cylinder portion 3 inserted to an inner peripheral face of the end portion 1A of the pipe 1.

The pipe 1 is, although of various material and construction may be used as long as the inner peripheral face is synthetic resin, preferably a synthetic resin pipe such as PEX (bridged polyethylene), PE (polyethylene), PB (polybutene), or, a compound pipe having a middle layer of metal such as aluminum. And, liquid such as cold and hot water, air, natural gas, LPG flows through the pipe 1 and the pipe joint J.

And, a C-shaped fastening ring body 5 with a slit 5A to fasten (as shown in Figure 2, Figure 3, and Figure 4) the pipe end portion 1A mounted to the insertion cylinder portion 3 with elastic fastening force, and a diameter expansion piece 6 releasably held by the slit 5A as to expand the fastening ring body 5 resisting the elastic force of the fastening ring body 5, are provided. The diameter expansion piece 6 detects a forth end portion 1B of the pipe 1 inserted as shown in Figure 1 and Figure 2 to be released.

As show in Figure 1, a part 6A of the diameter expansion piece 6 is formed as to protrude from an inner face of the fastening ring body 5 in an inward diameter direction to be released by contact with the forth end portion 1B of the inserted pipe 1 as shown in Figure 2.

And, as shown in Figure 1 through Figure 5, a C-shaped elastic mounted body 10 is tightly mounted to the peripheral face of the fastening ring body 5 to compose a pipe-fastening ring unit U having a double elastic construction to increase the elastic fastening force.

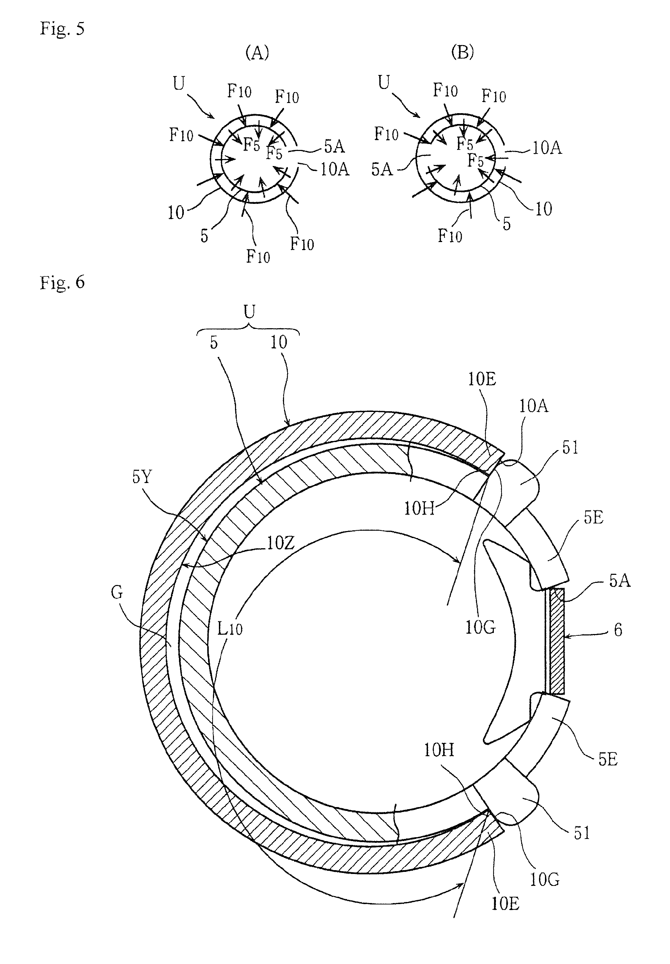

As schematically shown in Figure 5, the pipe-fastening ring unit U, in which the C-shaped fastening ring body 5 is disposed on an inner layer and the C-shaped elastic mounted body 10 is disposed on an outer layer to make a mutually and tightly fit double elastic construction, fastens the pipe end portion 1A (as shown in Figure 2) elastically in inward radial directions with augmented elastic force Fu. In this case, the elastic force in the inward radial directions is represented by F₅ for the fastening ring body 5 and F₁₀ for the C-shaped elastic mounted body 10 (refer to Figure 5), the augmented elastic force Fu of the unit U can be shown as Fu= F₅ + F₁₀.

The end portion 1A of the pipe 1 is press-fit to the insertion cylinder portion 3 with high contact pressure (in a state in which the diameter expansion piece 6 is released as in Figure 2) by the strong augmented elastic force Fu of the pipe-fastening ring unit U of the double elastic construction, and sufficient sealing function can be obtained even if sealing material (and a sealing groove) on the insertion cylinder portion 3 is completely omitted.

And, connecting members such as pins, rivets, bolts, bands, with which the fastening ring body 5 on the inner side (inner layer) and the C-shaped elastic mounted body 10 on the outer side (outer layer) are mutually connected, are omitted. That is to say, they are united as to always keep the mutual tight-fit state by the elastic force F₁₀ of the C-shaped elastic mounted body 10 to compose the above-mentioned pipe-fastening ring unit U.

The slit 5A of the fastening ring body 5 on the inner side (inner layer) and a slit 10A of the C-shaped elastic mounted body 10 on the outer side (outer layer) are disposed on the same position in assembly in one case as shown in Figure 5(A), and Figure 3 and Figure 4, or disposed on opposite positions for 180 ° in peripheral direction in another case shown in Figure 5(B).

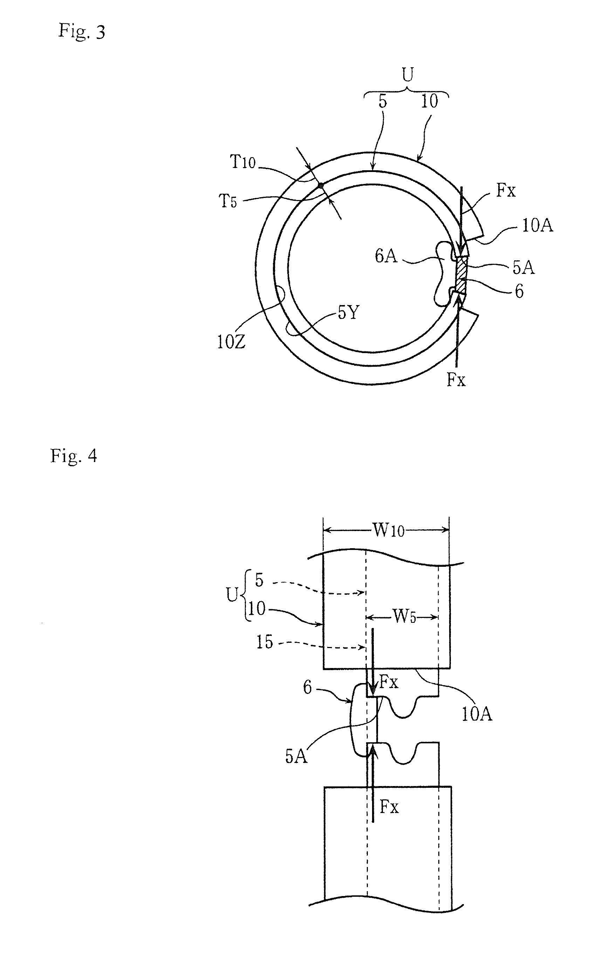

In the former case, there are advantages that the diameter expansion piece 6 of the configuration and construction as shown in Figure 3 and Figure 4 is easily jumped (released) in the outward radial direction, and the fastening ring body 5 and the mounted body 10 are easily expanded and diminished in diameter. The latter case is effective when the configuration and construction of the diameter expansion piece 6 (other than that of Figures) are formed to contact a part of the mounted body 10 to be jumped (released), and the elastic force Fu in the inward radial direction may be easily made uniform around the whole periphery.

Next, Figure 6 through Figure 11 show another embodiment.

That is to say, in the embodiment described with Figure 1 through Figure 5, the inner peripheral face 10Z of the C-shaped elastic mounted body 10 is mounted to a peripheral face 5Y of the fastening ring body 5 as to always contact tightly.

On the contrary, in Figure 6 through Figure 11, hitching protruding pieces 51 protrude in outward radial direction from near portions of both end portions 5E forming the slit 5A of the fastening ring body 5 (4 protruding pieces 51 in total), slit-forming end portions 10E of the C-shaped elastic mounted body 10 are made hitching to the hitching protruding pieces 51 to mount the C-shaped elastic mounted body 10 to the fastening ring body 5 with 90% to 100% of an arc length L₁₀ of the inner peripheral face 10Z in non-contact state to the peripheral face 5Y of the fastening ring body 5.

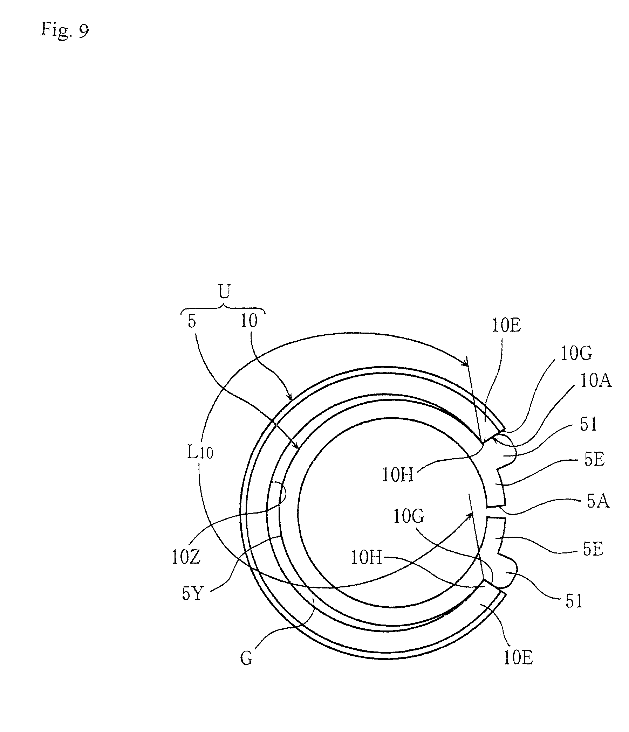

The non-contact state of 100% of the inner peripheral face 10Z is, as shown in Figure 6 and Figure 9, a state in which most end faces 10G forming the slit 10A of the C-shaped elastic mounted body 10 and/or inner corner portions 10H of the most end faces are strongly touching (press-fit).

And, as clearly shown in Figure 6, Figure 8, and Figure 9, when the non-contact state is 90% to 100%, (with the press-fitting of the most end faces 10G and/or the inner corner portions 10H) inner faces near the both end portions 10E of the C-shaped elastic mounted body 10 contact the peripheral face 5Y of the fastening ring body 5. And, a gap G is gradually widened as approaching to a middle position in peripheral direction from the end portion 10E, and the gap G is shaped like new moon (to crescent).

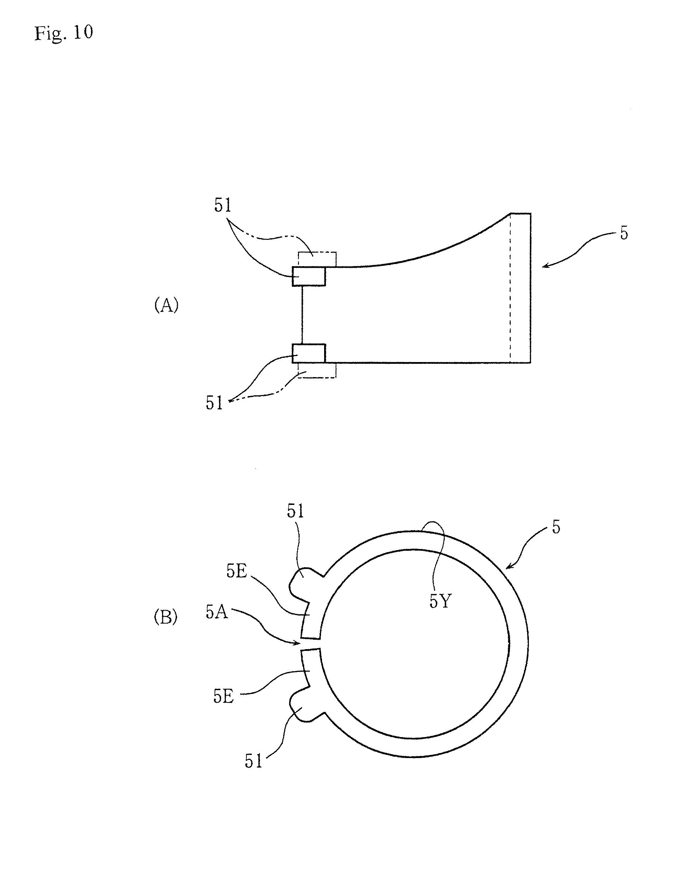

The 4 hitching protruding pieces 51 are, in a concrete example shown in Figure 10(A) with two-dot broken lines, and, in Figure 6, Figure 7, and Figure 11, formed by bending plastic work as to protrude to outer sides beyond a width dimension of the end portion 5E. Or, it is also preferable to make the protruding pieces 51 by casting as to protrude within the width dimension of the end portion 5E as shown in Figure 10(A) with solid lines, and, in Figure 10(B), and Figure 9.

As described above, as in the embodiment shown in Figures 6 through Figure 11, the construction, in which the gap G is formed with 90% or more of the arc length L₁₀ of the inner peripheral face 10Z of the C-shaped elastic mounted body 10 kept in the non-contact state to the peripheral face 5Y of the fastening ring body 5, has following advantages. That is to say, in Figure 3 through Figure 5, the high elastic force F₁₀ in the inward radial direction from the C-shaped elastic mounted body 10 works as shown in Figure 5, the peripheral face 5Y of the fastening ring body 5 and the inner peripheral face 10Z of the C-shaped elastic mounted body 10 are tightly fit (press-fit) with (very) high contact pressure, along with that, mutual frictional force of the fastening ring body 5 and the C-shaped elastic mounted body 10 becomes excessive, and a case that the pipe non-inserted state (unconnected state) shown in Figure 1 and Figure 3 may not smoothly change into the pipe inserted state (connected state) shown in Figure 2 is expected. That is to say, the mutual frictional force, expressed by (*µ* × F₁₀), frictional coefficient may be excessive depending on surface coarseness and situation of the peripheral face 5Y and the inner peripheral face 10Z, the elastic force F₁₀ may be excessive when the thickness and width dimension of the C-shaped elastic mounted body 10 are large, and a case that the unit U of the layered double construction with tight fitting may not smoothly diminish is expected.

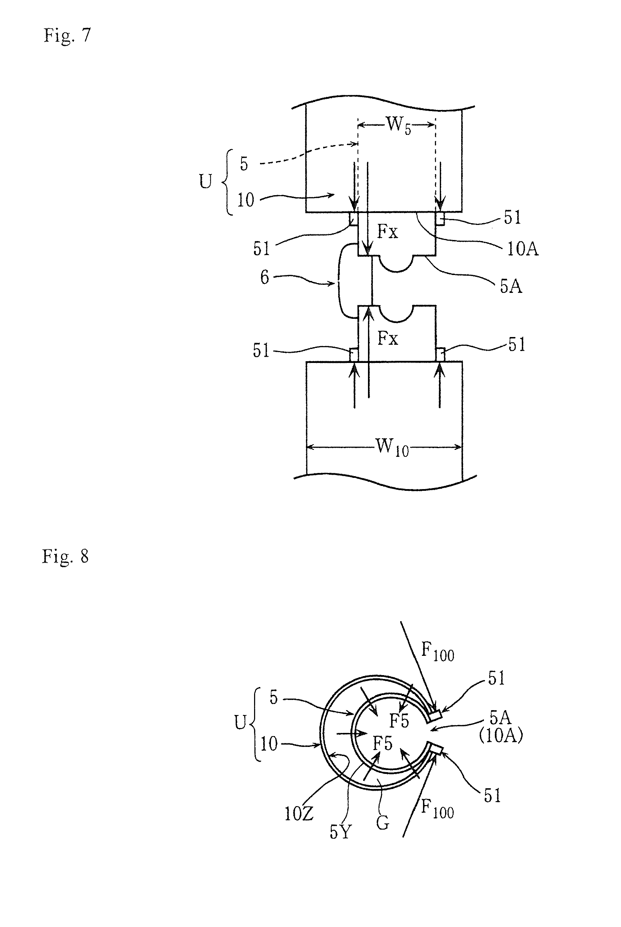

In the embodiment in Figure 6 through Figure 11, artfully solving this problem, as shown in Figure 8, the C-shaped elastic mounted body 10 gives (instead of the elastic force F₁₀ in the inner radial direction shown in Figure 5) high elastic force F₁₀₀ in a direction of a tangential line to the peripheral face 5Y of the fastening ring body 5 as to be concentrated on the hitching protruding pieces 51.

Especially, the pipe fastening ring unit U smoothly and freely diminishes in diameter as to correspond to the tolerance of outer diameter of the pipe 1, and the pipe joint of the embodiment in Figure 6 through Figure 11 is improved further. Except the above-mentioned gap G always maintained, the construction shown in Figure 1 and Figure 2 is similar to that of the embodiment in Figure 6 through Figure 11.

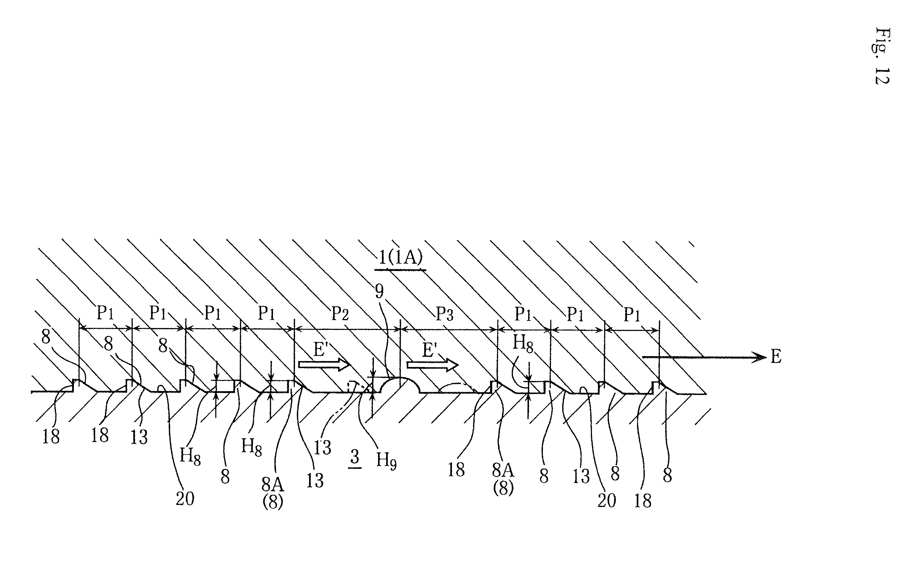

Next, Figure 12 is an enlarged view of a principal portion of Figure 2. In Figure 12, Figure 1, and Figure 2, omitting the sealing groove (peripheral concave groove) 34 and the sealing material 35 (as shown in Figure 14 and Figure 17 of the conventional example), plural low (triangular) hitching protrusions 8 are protruding from the peripheral face of the insertion cylinder portion 3 as independent rings. The hitching protrusions 8 are made bite into the inner peripheral face of the pipe end portion 1A by the fastening force to the pipe end portion 1A by the elastic force shown in Figures 5(A), 5(B), and 8 to stop the drawing off of the pipe in the arrow E direction and prevent the liquid from leaking outside. That is to say, the hitching protrusions 8 are made bite into the inner peripheral face of the end portion of the pipe 1 by the augmented elastic force Fu of the pipe-fastening ring unit U of the double construction to make stopping and sealing functions.

In the present invention, the number of the hitching protrusions 8 is preferably 3 to 9 (4 to 6 is especially desirable), and their pitch P₁ is a fine pitch of 2mm or less. In this case, it is preferable to increase and decrease the number of the hitching protrusions 8 as to correspond to a width dimension W₅ of the fastening ring body 5. And, the lowness of the hitching protrusion 8 is defined that a height dimension H₈ is 0.1mm to 0.3mm (nine hitching protrusions 8 are shown in Figure 1, Figure 2, and Figure 12).

Further, a round sealing protrusion 9 of low round mount is disposed on a middle position in the axis direction of the plural low hitching protrusions 8 protruding from the peripheral face of the insertion cylinder portion 3. The lowness of the round sealing protrusion 9 of low round mount is defined that a height dimension H₉ is 0.1mm to 0.3mm. As described above, the height dimensions H₈ and H₉ of the hitching protrusions 8 and the round sealing protrusion 9 are set to be approximately equal and sufficiently lower than conventional cone-shaped hitching protrusions. Further, the pitch P₁ is 2mm or less as described above to be very smaller than the conventional cone-shaped hitching protrusions.

And, as shown in Figure 12, a pitch P₂ and a pitch P₃ between the round sealing protrusion 9 and the neighboring hitching protrusions 8A are set to be larger than the mutual basic (interval) pitch P₁ between the hitching protrusions 8. The pitch P₂ and the pitch P₃ may be the same or slightly different.

If very large drawing force works momentarily in the arrow E direction, although the inner face of the pipe 1 moves toward the arrow E direction beyond many of the hitching protrusions 8, the hitching protrusions 8 are expected to hitch again to the triangle concave grooves 13 after the movement for the basic pitch P₁, and the pipe 1 moves only for the basic pitch P₁, as shown with arrows E'.

In this case, the flat peripheral face, where the concave groove 13 does not exist, moved for one pitch as shown with the arrow E', is elastically deformed into round concave as to correspond and tightly fit to the round sealing protrusion 9, and liquid leakage is not generated and stable sealing ability is shown because the flat peripheral face without abrasion is elastically deformed into round concave.

And, the hitching protrusions 8 is, as shown in Figure 12, desirably a right-angled triangle having a side 18 at right angles with the axis on an inner side of the pipe joint.

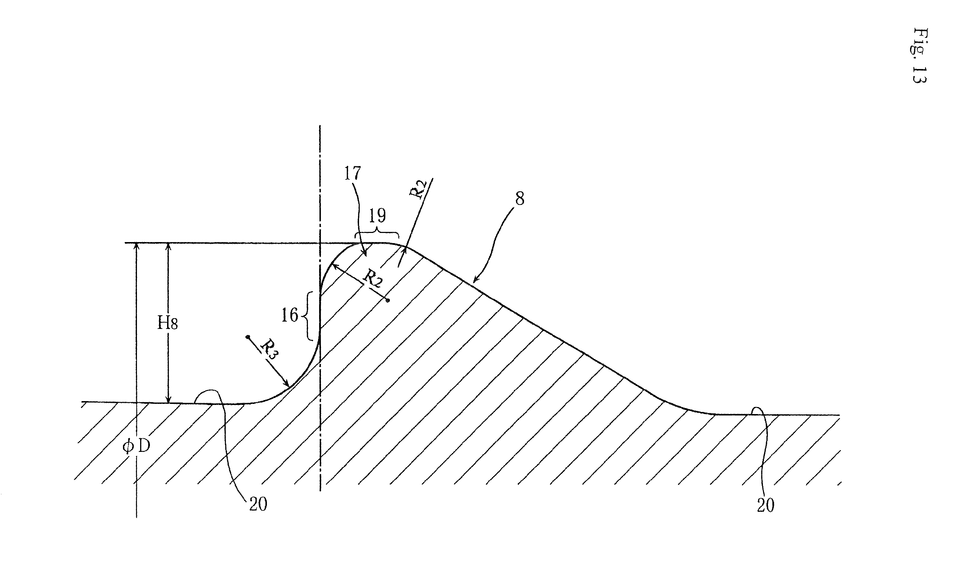

Or, as shown in an enlarged view of Figure 13, the hitching protrusion 8 has a vertical portion 16 at right angles with the axis, and a top portion 17 has an R portions R₁ and R₂, and a flat side 19. It is also desirable to make the top portion as a round top with a flat side, or form the flat side 19 not shown in Figures into a configuration having a round top portion not shown in Figures. With these configurations, forming is made easy with forging and casting, further, omitting the round protrusion 9 described with Figure 12, stopping function serves also as sealing (tight-seal) function. And, it is preferable to form an R portion R₃ on a corner portion on the bottom of the vertical portion 16 because the above-mentioned forming with forging and casting is made easy.

To explain additionally further, in Figures 1 through 5, and Figure 6, Figure 7, and Figure 11, the diameter-expansion piece 6 is composed of high rigidity steel, etc. to expand the inner diameter of the fastening ring body 5 to an inner diameter dimension slightly larger than the outer diameter of the pipe 1 in the non-inserted state of the pipe in Figure 1.

In the pipe-fastening ring unit U of double construction, it is desirable to make the fastening ring body 5 on the inner side with a configuration near an accurate true circle, and set a width dimension W₁₀ larger than the width dimension W₅ of the fastening ring body 5 as to make the C-shaped elastic mounted body 10 on the outer side show strong elastic force F₁₀ or F₁₀₀. Further, it is desirable to set a thickness dimension T₁₀ of the mounted body 10 larger than the thickness dimension T₅ of the fastening ring body 5.

In the pipe-fastening ring unit U of double construction, the fastening ring body 5 on the inner side (inner layer) is easily formed into C-shape with plastic work of spring steel, etc. (in comparison with a thick single ring), and also easily formed approximately an accurate true circle. On the other hand, the elastic mounted body 10 on the outer side (outer layer) is also easily formed into C-shape with plastic work of spring steel, etc. (in comparison with a thick single ring), and the production is possible even if the width dimension W₁₀ and the thickness dimension T₁₀ are large because circularity is not strictly required.

Further, to consider only the construction of the fastening ring body 5 on the inner side (inner layer), the fastening ring body 5 is slightly deformed conically (tapered) in the axis direction (the direction of the width dimension W₅) by the existence of the diameter-expansion piece 6 (when the mounted body 10 does not exist in Figures 3, 4, 6, and 7). That is to say, the diameter-expansion piece 6 exists not on the center of the axis direction (the direction of the width dimension W₅) but on a left end side of Figure 4 and Figure 7, the fastening ring body 5 elastically expanded is deformed into a tapered configuration diminishing in diameter from the left side to the right side of Figure 4 and Figure 7, and smooth insertion of the pipe 1 may be impeded. However, as shown in Figure 4, Figure 7, and Figure 1, the elastic mounted body 10 on the outer side (outer layer) is disposed as to extend from the diameter-expansion piece 6 and the inner end 15 of the fastening ring body 5 in the left direction (inner direction of the pipe joint) in Figure 4, Figure 7, and Figure 1, the diameter-expansion piece 6 can be disposed near the center of the width dimension W₁₀, and the inner diameter of the ring unit U, namely, the inner diameter of the fastening ring body 5 can be prevented from being tapered (conical) expanding to the inner direction of the pipe joint thereby.

For example, in case that the outer diameter of the pipe 1, to which the pipe joint J relating to the present invention is applied, is 10mm to 30mm, clamping force (elastic force) Fx to clamp and hold the diameter-expansion piece 6 is extremely large as 200kg to 800kg in Figure 4, Figure 7, and Figure 1. Especially, as shown in Figure 12, the hitching protrusions 8 and the sealing round protrusion 9 need to sufficiently bite into the inner peripheral face of the pipe to certainly conduct the tight sealing without sealing material, and the clamping force (elastic force) Fx must be set extremely large as 200kg to 800kg because the above-described elastic force Fu (=F₅+F₁₀) of the unit U must be made sufficiently large.

Therefore, the above-mentioned clamping force of 200kg to 800kg, which is regarded as quite impossible with the conventional fastening ring body 36 composed of a single material (spring steel belt plate) as shown in Figure 14 through Figure 17 of the conventional example, is achieved for the first time by the present invention.

In other words, that has been regarded as impossible because of the problems that the spring steel belt plate (over the yielding point) is broken in production, difficult to be worked in true circle, and the elastic force (fastening force) extremely changes along with the change of the diameter dimension when the spring steel belt plate, especially having large thickness dimension, is formed into a small cylindrical configuration of which inner diameter is 10mm plus to 30mm plus by plastic deformation.

And, in Figure 1 and Figure 2, a mark 12 represents a cover having a space in which the released diameter-expansion piece 6 is stored and preferably composed of transparent resin as to check whether the diameter-expansion piece 6 is released or not by eyes from the outside. And, as clearly shown in Figure 1 and Figure 2, the stopping ring 38 shown in Figure 14 through Figure 17 of the conventional example is completely omitted. Therefore, in Figure 14 through Figure 17, it is necessary that the cover (surrounding cylinder body) 41 receives the large drawing force from the pipe 31 in the axis direction received by the stopping ring 38 biting into the peripheral face of the pipe 31, and the cover 41 must be firmly connected to the joint main body 33 with the screwing portion 42, etc. On the contrary, in the present invention, strength is barely needed for the cover 12, a simple connection to the joint main body 2 is sufficient, and the cover 12 itself can be composed of thin resin.

To describe the width dimension W₅ of the fastening ring body 5 forming the inner layer side, when the outer diameter dimension of the insertion cylinder portion 3 is D, 0.4·D≦W₅ ≦0.9·D. Especially, it is preferable to make 0.6·D≦W₅ ≦0.8·D. For example, when D=13mm, W₅ =9mm, and when D=17mm, W₅ is set to be W₅ =11mm.

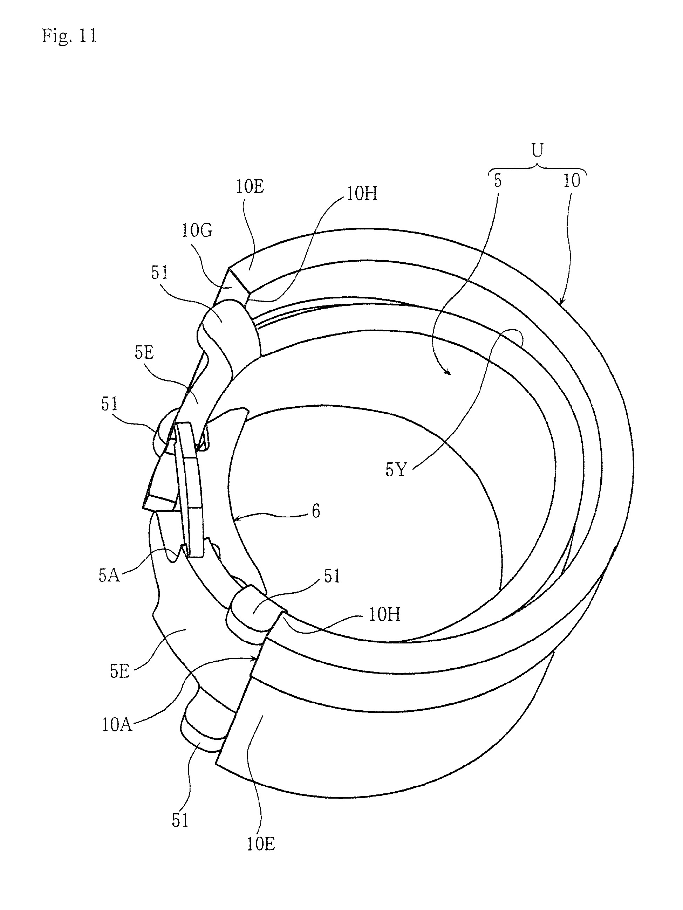

By setting the width dimension W₅ within the above range, each of the hitching protrusions 8 certainly bites into the inner peripheral face of the pipe 1, and the inner peripheral face of the pipe 1 can contact bottom faces 20 between the protrusions 8. Further, the number of the protrusions 8 is made small, and the biting force (pressure on press-fit face) of each of the protrusions 8 to the inner peripheral face of the pipe can be made large obtained from the same elastic force Fu. When the width dimension W₅ of the fastening ring body 5 changes in the peripheral direction as shown in Figure 10(A) and Figure 11, an average value of the width dimension W₅ is adopted.

The present invention, not restricted to the male screw adapter type shown in Figure 1 and Figure 2, is freely applied to various types of pipe joints such as a female screw adapter, a socket, a tee joint, etc.

As described above, the fastening ring body 5 and the elastic mounted body 10 are, within a range in which spring steel does not generate break, respectively worked into a cylinder of sufficiently small diameter (inner diameter of 10mm to 30mm, for example), and made as a unit of double construction by fitting as to form the inner layer and the outer layer, the pipe 1 is fastened by strong elastic fastening force which is thought impossible conventionally as to resist large drawing force, and the sealing material of the insertion cylinder portion 3 can be omitted because the present invention is a pipe joint provided with the joint main body 2 having the insertion cylinder portion 3 inserted to the end portion 1A of the pipe 1 to be connected, the C-shaped fastening ring body 5 with the slit 5A to fasten the end portion 1A of the pipe 1 mounted to the insertion cylinder portion 3 with elastic fastening force, the diameter expansion piece 6 releasably held by end portions of the slit 5A as to expand the fastening ring body 5 against the elastic force of the fastening ring body 5 and released by detection of the forth end portion 1B of the inserted pipe 1, in which the C-shaped elastic mounted body 10 mounted to the fastening ring body 5 to augment the elastic fastening force is provided. And, the conventional stopping ring 38 (refer to Figure 14 through Figure 17) can be omitted, and the construction of the pipe joint is simplified. And, the cover 12 can be thin as strength is not required, and connecting strength to the joint main body 2 can be low.

And, in the conventional example as shown in Figure 14 through Figure 17, both of the stopping ring 38 and the sealing material 35 make pipe insertion resistance, and the insertion work is not smoothly conducted. In the present invention, the both can be omitted, and the pipe can be smoothly inserted until the pipe end (inner end) 15 contacts the diameter-expansion piece 6. Therefore, working is not stopped with uncompleted insertion. Further, when the pipe 1 is drawn by hand, the pipe 1 is drawn out when the insertion is not completed (imperfect connection), and the uncompleted insertion can be noticed.

And, in the present invention, the pipe 1 is drawn out in case that the diameter-expansion piece 6 is not jumped by the insertion of the pipe 1 (imperfect connection), and uncompleted work (imperfect connection) can be easily discovered.

And, production and assembly of the parts are easy because the inner peripheral face 10Z of the C-shaped elastic mounted body 10 is always tightly fit to the peripheral face Y of the fastening ring body 5.

And, in spite of the strong clamping force, the pipe joint can be smoothly diminished and expanded in diameter as to be corresponding (applied) to various outer diameter dimension of the pipe 1, and the elastic force F₁₀₀ of the C-shaped elastic mounted body 10 can be loaded on the fastening ring body 5 without generating useless frictional loss because the inner peripheral face 10Z of the C-shaped elastic mounted body 10 is mounted to the peripheral face Y of the fastening ring body 5 as more than 90% of an arc length L₁₀ of the inner peripheral face 10Z is non-contact state, and the slit forming end portion 10E of the C-shaped elastic mounted body 10 is hitched to the hitching protruding piece 51 protruding near the both end portions 5E forming the slit 5A of the fastening ring body 5.

And, the thickness dimension of the insertion cylinder portion 3 can be decreased, the through hole of the insertion cylinder portion 3 can be formed sufficiently large along with the decrease, and fluid passing resistance is prevented from being increased because the end portion 1A of the pipe 1 is press-fit to the insertion cylinder portion 3 with high contact pressure by the augmented fastening force Fu, fastening the end portion 1A of the pipe 1 with the double elastic construction in which the C-shaped elastic mounted body 10 is mounted to the fastening ring body 5.

### EXPLANATION OF THE MARKS

- 1: A pipe
- 1A: An end portion
- 1B: A forth end portion
- 3: An insertion cylinder portion
- 5: A fastening ring body 5
- 5A: A slit
- 5E: An end portion
- 5Y: A peripheral face
- 6: A diameter-expansion piece
- 10: A C-shaped elastic mounted body
- 10E: An end portion
- 10Z: An inner peripheral face
- 51: A hitching protruding piece
- Fu: Augmented elastic force
- F₁₀: Elastic force
- F₁₀₀: Elastic force
- G: A gap
- L₁₀: An arc length

## Claims

1. A pipe joint provided with a joint main body (2) having an insertion cylinder portion (3) inserted to an end portion (1A) of a pipe (1) to be connected, a C-shaped fastening ring body (5) with a slit (5A) to fasten the end portion (1A) of the pipe (1) mounted to the insertion cylinder portion (3) with elastic fastening force, a diameter expansion piece (6) releasably held by end portions of the slit (5A) as to expand the fastening ring body (5) against the elastic force of the fastening ring body (5) and released by detection of a forth end portion (1B) of the inserted pipe (1), **characterized by** that a C-shaped elastic mounted body (10) mounted to the fastening ring body (5) to augment the elastic fastening force.

2. The pipe joint as set forth in claim 1, wherein an inner peripheral face (10Z) of the C-shaped elastic mounted body (10) is always tightly fit to a peripheral face (Y) of the fastening ring body (5).

3. The pipe joint as set forth in claim 1, wherein the inner peripheral face (10Z) of the C-shaped elastic mounted body (10) is mounted to the peripheral face (Y) of the fastening ring body (5) as more than 90% of an arc length (L₁₀) of the inner peripheral face (10Z) is non-contact state, and a slit forming end portion (10E) of the C-shaped elastic mounted body (10) is hitched to a hitching protruding piece (51) protruding near both end portions (5E) forming the slit (5A) of the fastening ring body (5).

4. The pipe joint as set forth in claim 1, wherein the end portion (1A) of the pipe (1) is press-fit to the insertion cylinder portion (3) with high contact pressure by augmented fastening force (Fu), fastening the end portion (1A) of the pipe (1) with a double elastic construction in which the C-shaped elastic mounted body (10) is mounted to the fastening ring body (5).
